# EUROPEAN PATENT APPLICATION

(11) **EP 4 657 941 A1**
(43) Date of publication of application: **03.12.2025**
(21) Application number: 23922423.1
(22) Date of filing: 23.11.2023
(51) Int. Cl.: H04W 72/044

(54) **RESOURCE ALLOCATION METHOD AND APPARATUS**

(30) Priority: 16.02.2023 CN 202310152980
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); SONG, Xinghua, Shenzhen, Guangdong 518129 (CN)
(74) Representative: Pfenning, Meinig & Partner mbB
(86) International application number: PCT/CN2023/133626
(87) International publication number: WO 2024/169307

(57) **Abstract**

A resource allocation method is provided. A plurality of scheduled resources used for resource allocation for a plurality of network devices are determined based on beam information of the plurality of network devices, to improve a scheduling mechanism between the plurality of network devices, and coordinate and reduce cross link interference and blocking interference between the network devices.

## Description

### TECHNICAL FIELD

This application relates to the field of communication technologies, and in particular, to a resource allocation method and an apparatus.

### BACKGROUND

Time division duplex (time division duplex, TDD) is widely used in deployment of wireless communication systems. Limited allocation of uplink time domain resources results in reduction in uplink coverage and increase in delay in TDD deployment. A possible enhancement method is using subband non-overlapping full duplex (subband non-overlapping full duplex, SBFD). In an SBFD scenario, there may be cross link interference (cross link interference, CLI) and blocking interference introduced between radio access network devices, resulting in deterioration of uplink network performance.

For the SBFD scenario, how to reduce the CLI and blocking interference between the radio access network devices is an urgent problem to be resolved.

### SUMMARY

According to a first aspect, an embodiment of this application provides a resource allocation method. The method may be performed by a central node, or may be performed by a module (for example, a processor, a chip, or a chip system) used in the central node, or may be implemented by a logical node, a logical module, or software that can implement all or a part of functions of the central node. The method includes: obtaining L pieces of first information, where one of the L pieces of first information includes beam information of a first network device, the first network device is one of N network devices, L is an integer greater than or equal to 1, and N is an integer greater than or equal to L; and determining M scheduled resources based on the L pieces of first information, where one of the M scheduled resources is used for resource allocation for one of M network devices, the N network devices include the M network devices, and M is a positive integer less than or equal to N.

According to the foregoing method, the L pieces of first information used for determining the M scheduled resources are obtained, and one of the M scheduled resources is used for resource allocation for one of the M network devices. In other words, the central node may allocate resources to the M network devices based on the L pieces of first information reflecting beam information of the N network devices, to improve a scheduling mechanism, and provide a basis for reducing cross link interference (cross link interference, CLI) and blocking interference between the network devices.

With reference to the first aspect, in some implementations of the first aspect, the beam information of the first network device indicates a reference signal received power (reference signal received power, RSRP) corresponding to a beam pair between the first network device and a network device other than the first network device in the N network devices. The beam information may indicate a beam pair between the first network device and a network device other than the first network device in the N network devices, and an RSRP corresponding to the beam pair; may indicate a beam pair between the first network device and a network device other than the first network device in the N network devices, and an RSRP corresponding to the beam pair, where the beam pair meets a specific condition; or may further indicate a plurality of beam pairs between the first network device and network devices other than the first network device in the N network devices, a maximum value RSRP_Max or a minimum value RSRP_Min in RSRPs corresponding to the plurality of beam pairs, and a difference ΔRSRP = RSRP_{Max}- RSRP or ΔRSRP = RSRP- RSRP_Min between RSRP-Max or RSRP-Min and an RSRP corresponding to a beam pair other than a beam pair corresponding to RSRP_Max or RSRP_Min. In this manner, for the N network devices, beam information related to N-1 beam pairs is reported in total, where L=N-1. In this manner, the beam information of the N network devices is centrally reported, to provide reference information for subsequent centralized scheduling during resource allocation for the network devices, and further help the central node perform overall planning on scheduled resources for all network devices, to avoid simultaneous scheduling of beams with strong interference between the network devices, thereby reducing CLI and blocking interference.

With reference to the first aspect, in some implementations of the first aspect, the beam information of the first network device indicates a beam pair between the first network device and a network device other than the first network device in the N network devices, where the beam pair meets a specific condition. In this manner, for the N network devices, beam information related to N-1 beam pairs is reported in total, where L=N-1. In this manner, the beam information of the N network devices is centrally reported, to provide reference information for subsequent centralized scheduling during resource allocation for the network devices, and to further reduce signaling overheads of the beam information. In addition, the foregoing implementation method may also help the central node perform overall planning on scheduled resources for all network devices, to avoid simultaneous scheduling of beams with strong interference between the network devices, thereby reducing CLI and blocking interference.

With reference to the first aspect, in some implementations of the first aspect, the beam information of the first network device indicates a beam weight of the first network device. In this manner, for the N network devices, beam information related to N beams is reported in total, where L=N. That the central node obtains the L pieces of first information may include: receiving the L pieces of first information from the N network devices, or may include: receiving L-1 pieces of first information from N-1 network devices, and locally obtaining one piece of first information, where the N network devices include the N-1 network devices, and the L pieces of first information include the L-1 pieces of first information and the one piece of first information. In this manner, beam weights of the N network devices are centrally reported, to provide reference information for subsequent centralized scheduling during resource allocation for the network devices. In addition, the foregoing implementation method may further help the central node perform overall planning on scheduled resources for all network devices, to avoid simultaneous scheduling of beams with strong interference between the network devices, thereby reducing CLI and blocking interference.

With reference to the first aspect, in some implementations of the first aspect, the central node sends second information to one of the M network devices, where the second information indicates one of the M scheduled resources. The scheduled resource is used for resource allocation for one of the M network devices. The scheduled resource includes one or more of a time domain resource, a frequency domain resource, or a space domain resource that is available to the network device. The network device obtains, from the scheduled resource, a resource used for data transmission. In this manner, resources are centrally allocated to the M network devices, to implement centralized scheduling for the M network devices, improve a scheduling mechanism, and reduce CLI and blocking interference between the N network devices.

With reference to the first aspect, in some implementations of the first aspect, the M scheduled resources include a first scheduled resource and a second scheduled resource, the first scheduled resource is used for resource allocation for a second network device, the second scheduled resource is used for resource allocation for a third network device, and the M network devices include the second network device and the third network device. The first scheduled resource includes a first beam, the second scheduled resource includes a second beam, and an RSRP corresponding to a beam pair of the first beam and the second beam is less than a third threshold. The third threshold may be a maximum CLI value and blocking interference value that are between the second network device and the third network device and that do not affect transmission service performance. According to this method, a scheduling mechanism between a plurality of network devices is improved, and CLI and blocking interference between the network devices are coordinated and reduced.

According to a second aspect, an embodiment of this application provides a resource allocation method. The method may be performed by a radio access network device (which may also be referred to as a network device), or may be performed by a module (for example, a processor, a chip, or a chip system) used in the radio access network device, or may be implemented by a logical node, a logical module, or software that can implement all or a part of functions of the radio access network device. Herein, the method is described by using an example in which the network device is an execution entity. The network device is one of N network devices. The method includes: sending first information to a central node, where the first information includes beam information of the network device. Optionally, second information from the central node is received, where the second information indicates a scheduled resource. The scheduled resource is used for resource allocation for the network device. The scheduled resource includes one or more of a time domain resource, a frequency domain resource, or a space domain resource that is available to the network device. The network device obtains, from the scheduled resource, a resource used for data transmission. In this manner, resources are allocated to the network devices, to implement centralized scheduling for the network devices, improve a scheduling mechanism, and reduce CLI and blocking interference between the N network devices.

With reference to the second aspect, in some implementations of the second aspect, the beam information of the network device indicates an RSRP corresponding to a beam pair between the network device and a network device other than the network device in the N network devices. The beam information may indicate a beam pair between the network device and a network device other than the network device in the N network devices, and an RSRP corresponding to the beam pair, may indicate a beam pair that meets a specific condition and that is between the network device and a network device other than the network device in the N network devices, and an RSRP corresponding to the beam pair, or may further indicate a plurality of beam pairs between the network device and network devices other than the network device in the N network devices, a maximum value RSRP_Max or a minimum value RSRP_Min in RSRPs corresponding to the plurality of beam pairs, and a difference ΔRSRP = RSRP_{Max}- RSRP or ΔRSRP = RSRP- RSRP_Min between RSRP-Max or RSRP-Min and an RSRP corresponding to a beam pair other than a beam pair corresponding to RSRP_Max or RSRP_Min. In this manner, beam information of the network devices is reported, to provide reference information for subsequent centralized scheduling during resource allocation for the network devices, and further help the central node perform overall planning on scheduled resources for all network devices, to avoid simultaneous scheduling of beams with strong interference between the network devices, thereby reducing CLI and blocking interference.

With reference to the second aspect, in some implementations of the second aspect, the beam information of the network device indicates a beam pair between the network device and a network device other than the network device in the N network devices, where the beam pair meets a specific condition. In this manner, beam information of the network devices is reported, to provide reference information for subsequent centralized scheduling during resource allocation for the network devices, and to further reduce signaling overheads of the beam information. In addition, the foregoing implementation method may also help the central node perform overall planning on scheduled resources for all network devices, to avoid simultaneous scheduling of beams with strong interference between the network devices, thereby reducing CLI and blocking interference.

With reference to the second aspect, in some implementations of the second aspect, the beam information of the network device indicates a beam weight of the network device. In this manner, beam weights of the network devices are reported, to provide reference information for subsequent centralized scheduling during resource allocation for the network devices. In addition, the foregoing implementation method may further help the central node perform overall planning on scheduled resources for all network devices, to avoid simultaneous scheduling of beams with strong interference between the network devices, thereby reducing CLI and blocking interference.

With reference to the second aspect, in some implementations of the second aspect, the network device obtains, from the scheduled resource, the resource used for data transmission, to reduce a probability that a beam pair with large interference between the network device and a network device other than the network device in the N network devices is simultaneously scheduled, or simultaneously schedule a beam pair with large interference between the network device and a network device other than the network device in the N network devices at a large frequency interval. In this manner, a resource is allocated to the network device, and CLI and blocking interference between the N network devices are reduced.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus can be implemented by software and/or hardware. The apparatus may be, for example, a central node, or may be a module (for example, a chip, a chip system, or a processor) used in the central node, or may be a logical node, a logical module, or software that can implement all or a part of functions of the central node. The central node may be a device other than a radio access network device, for example, an operations, maintenance and management (operations, administration and management, OAM) module, may be a radio access network device, or may be a part of modules or units in the radio access network device, for example, a central unit (central unit, CU).

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus can be implemented by software and/or hardware. The apparatus may be, for example, a radio access network device, may be a module (for example, a chip, a chip system, or a processor) used in the radio access network device, or may be a logical node, a logical module, or software that can implement all or a part of functions of the radio access network device.

According to a fifth aspect, an embodiment of this application provides an apparatus, including a processor. The processor is coupled to a memory. The memory is configured to store instructions. When the instructions are executed by the processor, the method according to any one of the first aspect or the possible implementations of the first aspect is enabled to be implemented.

According to a sixth aspect, an embodiment of this application provides an apparatus, including a processor. The processor is coupled to a memory. The memory is configured to store instructions. When the instructions are executed by the processor, the method according to any one of the second aspect or the possible implementations of the second aspect is enabled to be implemented.

According to a seventh aspect, an embodiment of this application provides a computer-readable storage medium. The computer-readable storage medium stores instructions. When the instructions are executed, the method according to any one of the first aspect or the possible implementations of the first aspect is enabled to be performed.

According to an eighth aspect, an embodiment of this application provides a computer-readable storage medium. The computer-readable storage medium stores instructions. When the instructions are executed, the method according to any one of the second aspect or the possible implementations of the second aspect is enabled to be performed.

According to a ninth aspect, an embodiment of this application provides a computer program product. The computer program product includes computer program code. When the computer program code is run on a computer, the method according to any one of the first aspect or the possible implementations of the first aspect is enabled to be performed.

According to a tenth aspect, an embodiment of this application provides a computer program product. The computer program product includes computer program code. When the computer program code is run on a computer, the method according to any one of the second aspect or the possible implementations of the second aspect is enabled to be performed.

According to an eleventh aspect, an embodiment of this application provides a chip, including a processor. The processor is coupled to a memory. The memory is configured to store instructions. When the instructions are executed by the processor, the method according to any one of the first aspect, the second aspect, the possible implementations of the first aspect, or the possible implementations of the second aspect is enabled to be implemented.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of the features corresponding to the first aspect and the second aspect in the third aspect to the thirteenth aspect, refer to related descriptions in the first aspect and the second aspect. Details are not described again.

### BRIEF DESCRIPTION OF DRAWINGS

FIG. 1 is a diagram of a communication system to which an embodiment of this application is applied;
FIG. 2 shows configuration of a time domain resource unit in a time division duplex system;
FIG. 3 shows configuration of a time domain resource unit and a frequency domain resource unit of subband non-overlapping full duplex;
FIG. 4 shows a scenario of a base station subband non-overlapping full duplex (subband non-overlapping full duplex, SBFD) communication system to which an embodiment of this application is applicable;
FIG. 5 is a diagram of a resource allocation method according to an embodiment of this application;
FIG. 6 is a diagram of reporting, for N network devices, L pieces of first information according to an embodiment of this application, where L=N-1;
FIG. 7 is another diagram of reporting, for N network devices, L pieces of first information according to an embodiment of this application, where L=N;
FIG. 8 is a diagram of possible effective time of M scheduled resources;
FIG. 9 is another diagram of possible effective time of M scheduled resources;
FIG. 10 shows a scenario of a flexible time division duplex (time division duplex, TDD) communication system to which an embodiment of this application is applicable;
FIG. 11 is a diagram of a structure of an apparatus according to an embodiment of this application; and
FIG. 12 is a diagram of another apparatus according to an embodiment of this application.

### DESCRIPTION OF EMBODIMENTS

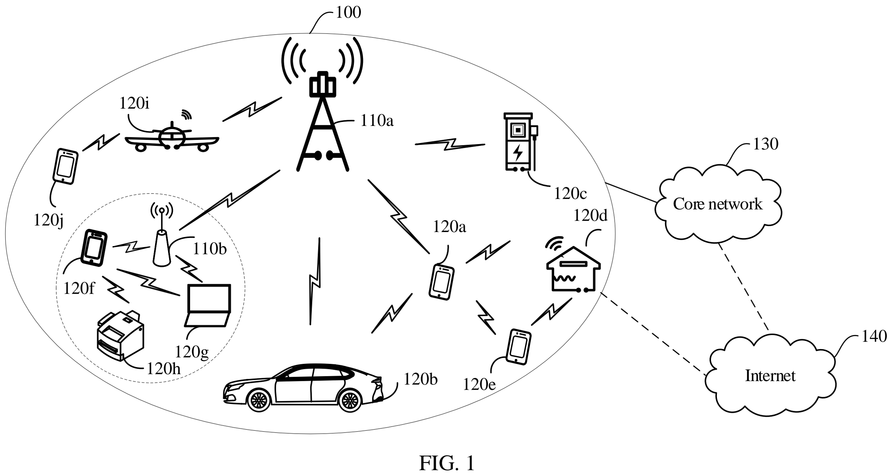

FIG. 1 is a diagram of an architecture of a communication system to which an embodiment of this application is applied. As shown in FIG. 1, the communication system 10 includes a radio access network (radio access network, RAN) 100 and a core network (core network, CN) 130. Optionally, the communication system 10 may further include an internet 140. The RAN 100 may include at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 130 in a wireless or wired manner. A core network device in the core network 130 and the RAN node 110 in the RAN 100 may be different independent physical devices, may be a same physical device that integrates a core network logical function and a radio access network logical function, or may be a device that integrates a part of core network logical functions and a part of radio access network logical functions. The terminals may be connected to each other in a wired or wireless manner and the RAN nodes may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4^{th} generation (4^{th} generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, an open radio access network (open RAN, O-RAN, or ORAN) system, a cloud radio access network (cloud radio access network, CRAN) system, a wireless-fidelity (wireless-fidelity, Wi-Fi) system, a communication system related to a 3^{rd} generation partnership project (3^{rd} generation partnership project, 3GPP), and another communication system of this type, or may be a communication system integrating the foregoing two or more systems.

The RAN node may also have different expressions, for example, a radio access network device. In this application, unless otherwise specified, the radio access network device is used for expression. The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes a part of functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node or a donor node, or may be a radio controller in a CRAN scenario. Optionally, the radio access network device may alternatively be a server, a wearable device, a vehicle, a vehicle-mounted device, or the like. For example, the access network device in a vehicle to everything (vehicle to everything, V2X) technology may be a road side unit (road side unit, RSU). It may be understood that all or a part of functions of the radio access network device in this application may alternatively be implemented by using a software function running on hardware, or may be implemented by using an instantiated virtualization function on a platform (for example, a cloud platform). Alternatively, the radio access network device in this application may be a logical node, a logical module, or software that can implement all or a part of functions of the radio access network device.

In another possible scenario, a plurality of radio access network devices collaborate to assist the terminal in implementing radio access, and different radio access network devices respectively implement a part of functions of the base station. For example, the radio access network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A specific technology and a specific device form that are used by the radio access network device are not limited in embodiments of this application. For ease of description, the following provides descriptions by using an example in which the base station is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between a base station and a terminal, between base stations, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz, or may be performed through both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. A control subsystem that includes a base station function herein may be a control center in an application scenario of the foregoing terminal, such as a smart grid, an industrial control, a smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to a terminal, where the sidelink information is carried on a sidelink channel. The information may be control information, or may be data information.

The communication system to which this embodiment of this application is applied shown in FIG. 1 may further include a central node (not shown in FIG. 1). The central node may exchange information with the radio access network device in the communication system. The central node in this application may also be referred to as a centralized control node or a central control node. In this application, unless otherwise specified, the central node is used for description.

In a possible application scenario, the central node may be a device other than a radio access network device, for example, an operations, maintenance and management (operations, administration and management, OAM) module. The OAM module is mainly configured to complete routine analysis, prediction, planning, and configuration for networks and services.

In another possible application scenario, the central node may alternatively be a radio access network device, or may be a part of modules or units in the radio access network device, for example, a central unit (central unit, CU).

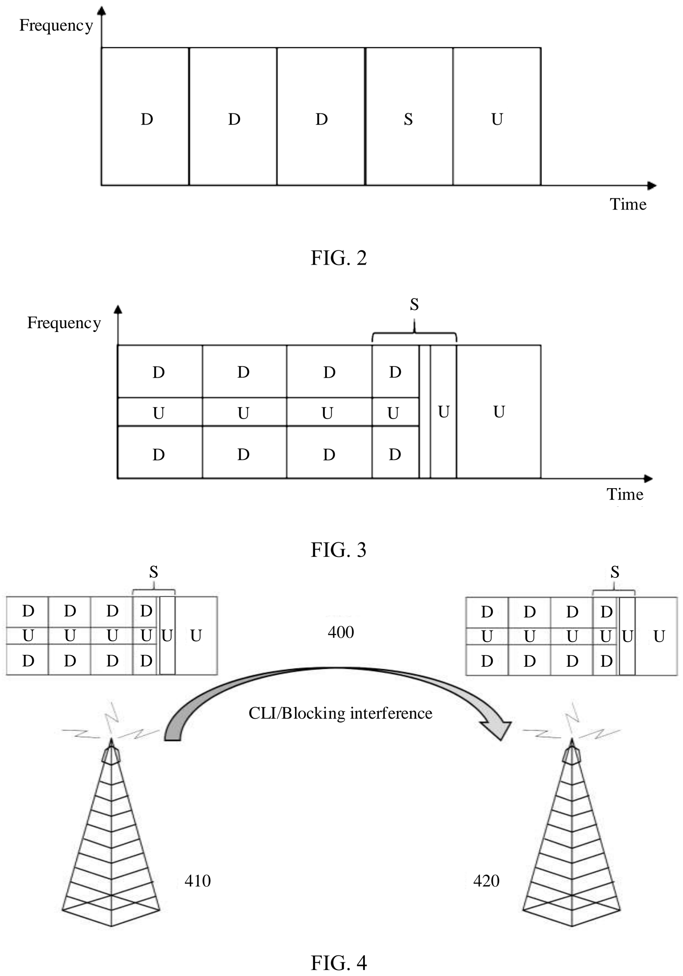

Time division duplex (time division duplex, TDD) is widely used in deployment of wireless communication systems. In TDD deployment, time domain resource units are configured as uplink time domain resource units and downlink time domain resource units, and the time domain resource unit may be a subframe, a slot, or a symbol. For example, a possible slot configuration in TDD deployment is DDDSU. As shown in FIG. 2, D represents a downlink slot, and each symbol in the downlink slot is a downlink symbol. U represents an uplink slot, and each symbol in the uplink slot is an uplink symbol. S is a special slot, and the special slot includes an uplink symbol and a downlink symbol. Limited allocation of uplink time domain resources results in a reduction in uplink coverage is reduced and an increase in a delay in TDD. A possible enhancement method is using subband non-overlapping full duplex (subband non-overlapping full duplex, SBFD). In SBFD, frequency domain resources of all or a part of downlink time domain resource units and/or flexible time domain resource units are divided into at least one uplink frequency domain resource unit and at least one downlink frequency domain resource unit, and uplink data transmission is allowed to be performed on an uplink frequency domain resource unit in the downlink time domain resource unit. A frequency domain resource unit may be a subband, and the subband may include one or more subcarriers. For example, as shown in FIG. 3, a frequency domain resource of each downlink slot D is divided into one uplink subband and two downlink subbands, and a frequency domain resource of each downlink symbol in the special slot S is divided into two downlink subbands and one uplink subband. Therefore, in SBFD, there are more uplink resources to improve uplink coverage performance, and there are more uplink resources to carry hybrid automatic repeat request (hybrid automatic repeat request, HARQ) feedback information, to reduce a feedback delay. The base station may support SBFD. For example, the base station may receive uplink data from the terminal on an uplink subband in a downlink slot, and may simultaneously send downlink data to another terminal on a downlink subband in the downlink slot.

FIG. 4 shows an example of a scenario of a base station SBFD communication system to which an embodiment of this application is applicable. FIG. 4 shows the system 400, including a radio access network device 410 and a radio access network device 420. For example, the radio access network device 410 and the radio access network device 420 perform slot configuration and frequency domain resource division in a slot in the manner shown in FIG. 3. The radio access network device 410 and the radio access network device 420 support SBFD. In this scenario, crosslink interference (cross link interference, CLI) and blocking interference are introduced between the radio access network device 410 and the radio access network device 420, resulting in deterioration of uplink network performance. For example, the radio access network device 410 sends downlink data to a terminal on a downlink subband in a downlink slot D, and the radio access network device 420 simultaneously receives uplink data from another terminal on an uplink subband in the same downlink slot D. Because the radio access network device 410 has high downlink power on the downlink subband in the slot and inter-subband leakage exists, CLI and blocking interference are generated on uplink data receiving of the radio access network device 420 during downlink data sending of the radio access network device 410, resulting in deterioration of uplink network performance of the radio access network device 420.

This application provides a resource allocation method mainly from a perspective of reducing CLI and blocking interference between radio access network devices, to coordinate and reduce the CLI and blocking interference between the radio access network devices by improving a scheduling mechanism between the radio access network devices.

The following describes technical solutions of this application with reference to the accompanying drawings.

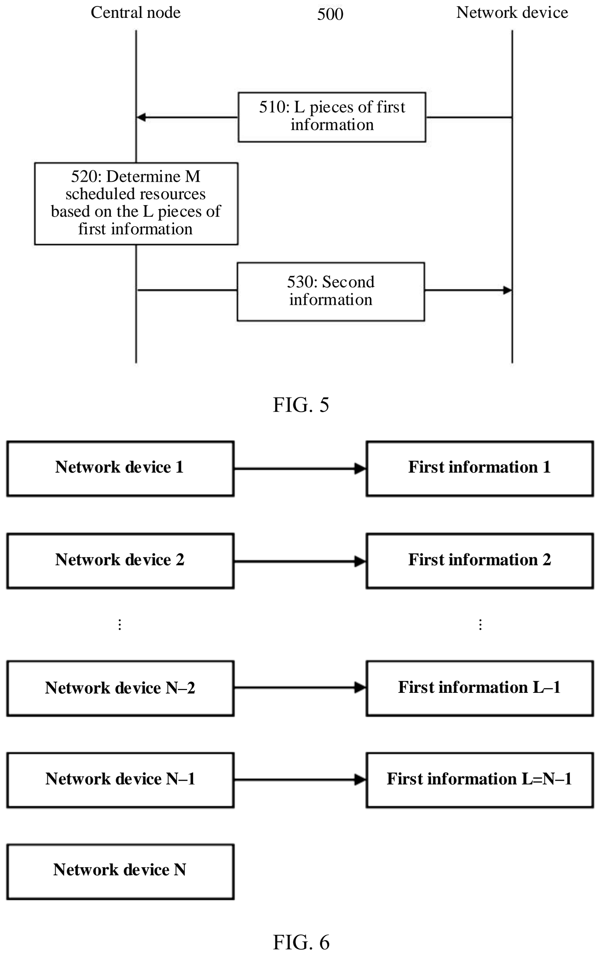

FIG. 5 is an interaction diagram of a resource allocation method 500 according to an embodiment of this application. In FIG. 5, an example in which a central node and a network device are used as execution entities of the illustrative interaction is used for illustrating the method. However, the execution entities of the illustrative interaction are not limited in this application. For example, the central node in FIG. 5 may alternatively be a module (for example, a chip, a chip system, or a processor) used in the central node, or may be a logical node, a logical module, or software that can implement all or a part of functions of the central node. The network device in FIG. 5 may alternatively be a module (for example, a chip, a chip system, or a processor) used in the network device, or may be a logical node, a logical module, or software that can implement all or a part of functions of the network device. As shown in FIG. 5, the method 500 in this embodiment may include a part 510 and a part 520.

Part 510: The network device sends L pieces of first information to the central node, where one of the L pieces of first information includes beam information of a first network device, the first network device is one of N network devices, L is an integer greater than or equal to 1, and N is an integer greater than or equal to L. Correspondingly, the central node obtains the L pieces of first information. The network device that sends the L pieces of first information to the central node may be the N network devices, or may be N-1 network devices in the N network devices.

For example, the L pieces of first information may respectively include beam information of the N network devices, where L=N; or the L pieces of first information may respectively include beam information of the N-1 network devices, where L=N-1.

It may be understood that information in this application may also be referred to as a parameter or an information element.

Part 520: The central node determines M scheduled resources based on the L pieces of first information, where one of the M scheduled resources is used for resource allocation for one of M network devices, the N network devices include the M network devices, and M is a positive integer less than or equal to N. For example, each of the M scheduled resources is used for resource allocation for each of the M network devices.

In the method 500, the central node obtains the L pieces of first information used for determining the M scheduled resources, and uses one of the M scheduled resources for resource allocation for one of the M network devices. In other words, the central node may allocate resources to the M network devices based on the L pieces of first information reflecting the beam information of the N network devices, to improve a scheduling mechanism, and provide a basis for reducing CLI and blocking interference between the network devices.

In this application, "sending information to... (for example, the central node)" may be understood as that a destination end of the information is the central node, and may include directly or indirectly sending information to the central node. "Receiving... information from (the network device)" may be understood as that a source end of the information is the network device, and may include directly or indirectly receiving information from the network device. Necessary processing, such as a format change, may be performed on information between a source end and a destination end for sending the information. However, the destination end can understand valid information from the source end. A similar expression in this application may be understood similarly, and details are not described herein.

One of the L pieces of first information includes the beam information of the first network device. The beam information may be information related to a beam, or may be information related to a beam pair. For example, the beam pair may include an uplink beam of the first network device and a downlink beam of a network device other than the first network device in the N network devices.

In a possible implementation of the beam information, the beam information of the first network device indicates a reference signal received power (reference signal received power, RSRP) corresponding to a beam pair between the first network device and a network device other than the first network device in the N network devices. For example, the RSRP corresponding to the beam pair may be an RSRP of a downlink signal received on an uplink beam of the first network device and from a downlink beam of a network device other than the first network device in the N network devices. It may be understood that beam information in this manner is information related to a beam pair.

For example, the beam information may indicate a beam pair between the first network device and a network device other than the first network device in the N network devices, and an RSRP corresponding to the beam pair. The beam information may include Cell ID, Beam ID, and RSRP. Cell ID represents a network device index. For example, Cell ID#1 represents a network device with a network device index being 1. Beam ID represents a beam index. For example, Beam ID#1 represents a beam with a beam index being 1. The beam index Beam ID may be a synchronization signal block (synchronization signal block, SSB) index, may be a channel state information reference signal (channel state information reference signal, CSI-RS) resource indicator (resource indicator, RI) (CRI), or may be a transmission configuration indicator (transmission configuration indicator, TCI). For example, each SSB index corresponds to one beam of one network device in the N network devices, each CRI corresponds to one CSI-RS beam, and each TCI corresponds to one beam.

For example, beam information {{Cell ID#1, Beam ID#1}, {Cell ID#2, Beam ID#2}, RSRP} indicates a beam pair between a beam with a beam index being 1 of a network device with a network device index being 1 and a beam with a beam index being 2 of a network device with a network device index being 2, and an RSRP corresponding to the beam pair. It may be understood that when an index of the first network device is 1, Cell ID#1 may not be included in the beam information.

For example, the beam information may alternatively indicate a beam pair between the first network device and a network device other than the first network device in the N network devices, and an RSRP corresponding to the beam pair, where the beam pair meets one of the following conditions:
(1) RSRP>η1, indicating that the RSRP corresponding to the beam pair is greater than η1 decibel milliwatt (milliwatt decibel, dBm);
(2) RSRP≥η1, indicating that the RSRP corresponding to the beam pair is greater than or equal to η1 dBm;
(3) RSRP<η2, indicating that the RSRP corresponding to the beam pair is less than η2 dBm;
(4) RSRP≤η2, indicating that the RSRP corresponding to the beam pair is less than or equal to η2 dBm;
(5) top N1 beam pairs sorted in descending order based on RSRPs corresponding to beam pairs; or
(6) last N2 beam pairs sorted in descending order based on RSRPs corresponding to beam pairs.

For example, beam information {{Cell ID#1, Beam ID#1}, {Cell ID#2, Beam ID#2}, RSRP} indicates a beam pair between a beam with a beam index being 1 of a network device with a network device index being 1 and a beam with a beam index being 2 of a network device with a network device index being 2, and an RSRP corresponding to the beam pair, where beam pair meets the condition (1), that is, RSRP>η1.

For another example, RSRPs corresponding to beam pairs between the first network device and network devices other than the first network device in the N network devices are sorted in descending order as RSRP_1>RSRP_2>...>RSRP_N1>.... The beam information indicates beam pairs between the first network device and the network devices other than the first network device in the N network devices, and RSRPs corresponding to the beam pairs, where the beam pairs meet the condition (5), that is, the beam information indicates: RSRP_1, RSRP_2, ..., and RSRP_N1, and beam pairs respectively corresponding to RSRP_1, RSRP_2, ..., and RSRP_NI1.

For example, the beam information may further indicate a plurality of beam pairs between the first network device and network devices other than the first network device in the N network devices, a maximum value RSRP_Max or a minimum value RSRP_Min in RSRPs corresponding to the plurality of beam pairs, and a difference ΔRSRP = RSRP_Max - RSRP or ΔRSRP = RSRP - RSRP_Min between RSRP-Max or RSRP-Min and an RSRP corresponding to a beam pair other than a beam pair corresponding to RSRP_Max or RSRP_Min. For example, beam information {{Cell ID#1, Beam ID#1}, {Cell ID#2, Beam ID#2}, RSRP_Max, ΔRSRP} indicates a beam pair between a beam with a beam index being 1 of a network device with a network device index being 1 and a beam with a beam index being 2 of a network device with a network device index being 2, and an RSRP corresponding to the beam pair, where RSRP=RSRP_Max-ΔRSRP.

According to the foregoing implementation method, the central node obtains the L pieces of first information, where one of the L pieces of first information includes the beam information indicating an RSRP corresponding to the beam pair between the first network device and the network device (which may also be referred to as another network device) other than the first network device in the N network devices. It may be understood that, in this implementation, the N network devices report N-1 pieces of beam information in total. For example, as shown in FIG. 6, a network device 1 reports beam information between the network device 1 and network devices other than the network device 1 in the network device 1 to a network device N, where the beam information is included in first information 1; a network device 2 reports beam information between the network device 2 and network devices other than the network device 2 in the network device 1 to the network device N, where the beam information is included in first information 2; ...; and a network device N-1 reports beam information between the network device N-1 and network devices other than the network device N-1 in the network device 1 to the network device N, where the beam information is included in first information L, and L=N-1.

For example, as shown in FIG. 6, the first information 1 includes beam information for RSRPs corresponding to beam pairs between the network device 1 and the network device 2 to the network device N; the first information 2 includes beam information for RSRPs corresponding to beam pairs between the network device 2 and the network device 1 and between the network device 2 and a network device 3 to the network device N; ...; and the first information N-1 includes beam information for RSRPs corresponding to beam pairs between the network device N-1 and the network device 1 to a network device N-2 and between the network device N-1 and the network device N.

For another example, as shown in FIG. 6, the first information 1 includes beam information for RSRPs corresponding to beam pairs between the network device 1 and the network device 2 to the network device N; the first information 2 includes beam information for RSRPs corresponding to beam pairs between the network device 2 and a network device 3 to the network device N; ...; and the first information N-1 includes beam information for RSRPs corresponding to beam pairs between the network device N-1 and the network device N.

According to the implementation method, the beam information of the N network devices is centrally reported, to provide reference information for subsequent centralized scheduling during resource allocation for the network devices. In addition, the foregoing implementation method may further help the central node perform overall planning on scheduled resources for all network devices, to avoid simultaneous scheduling of beams with strong interference between the network devices, thereby reducing CLI and blocking interference.

In another possible implementation of the beam information, the beam information of the first network device indicates a beam pair between the first network device and a network device other than the first network device in the N network devices, and the beam pair meets:
an RSRP corresponding to the beam pair is greater than a first threshold;
an RSRP corresponding to the beam pair is less than a second threshold;
the beam pair is first top N1 beam pairs sorted in descending order based on RSRPs corresponding to beam pairs; or
the beam pair is last N2 beam pairs sorted in descending order based on RSRPs corresponding to beam pairs.

It may be understood that the beam information is information related to a beam pair.

For example, beam information { {Cell ID#1, Beam ID#1}, {Cell ID#2, Beam ID#2}} indicates a beam pair between a beam with a beam index being 1 of a network device with a network device index being 1 and a beam with a beam index being 2 of a network device with a network device index being 2, where the beam pair meets the foregoing condition.

In the foregoing implementation method, the N network devices report the N-1 pieces of beam information in total, as shown in FIG. 6, where L=N-1.

According to the foregoing implementation method, the beam information of the N network devices is centrally reported, to provide reference information for subsequent centralized scheduling during resource allocation for the network devices, and further reduce signaling overheads of the beam information. In addition, the foregoing implementation method may also help the central node perform overall planning on scheduled resources for all network devices, to avoid simultaneous scheduling of beams with strong interference between the network devices, thereby reducing CLI and blocking interference.

In a possible implementation method of the part 520, the central node determines the M scheduled resources based on a beam pair between the N network devices and an RSRP corresponding to the beam pair, where the M scheduled resources are used for resource allocation for the M network devices.

In a possible implementation method for determining the M scheduled resources by the central node, when the RSRP corresponding to the beam pair between the first network device and the network device (which may also be referred to as another network device) other than the first network device in the N network devices is greater than the first threshold, the central node determines that at least one of a time domain resource, a frequency domain resource, or a space domain resource corresponding to a downlink beam of the another network device is included in the M scheduled resources. For example, an RSRP corresponding to a beam pair between the first network device and a second network device is greater than the first threshold, the another network device includes the second network device, and the central node determines that a time domain resource corresponding to a downlink beam of the second network device is included in the M scheduled resources. One of the M scheduled resources is used for time domain resource allocation for the second network device, to reduce a probability that the beam pair between the first network device and the second network device is simultaneously scheduled. For another example, the central node determines that a time domain resource and a frequency domain resource corresponding to a downlink beam of a second network device are included in the M scheduled resources. One of the M scheduled resources is used for time domain resource allocation and frequency domain resource allocation for the second network device, to simultaneously schedule the beam pair between the first network device and the second network device at a large frequency interval.

In a possible implementation method for determining the M scheduled resources by the central node, when an RSRP corresponding to beam pair between the first network device and the another network device in the N network devices is less than the second threshold, the central node determines that none of a time domain resource, a frequency domain resource, and a space domain resource corresponding to a downlink beam of the another network device is included in the M scheduled resources. For example, an RSRP corresponding to a beam pair between the first network device and a second network device is less than the second threshold, the another network device includes the second network device, and the central node determines that neither a time domain resource nor a frequency domain resource corresponding to a downlink beam of the second network device is included in the M scheduled resources. One of the M scheduled resources is not used for time domain resource allocation or frequency domain resource allocation for the second network device, and the beam pair between the first network device and the second network device may be simultaneously scheduled.

According to the implementation method, receive beams and transmit beams with small interference between network devices in the M network devices can be simultaneously scheduled, to reduce a probability that receive beams and transmit beams with large interference between network devices in the M network devices are simultaneously scheduled.

In another possible implementation of the beam information, the beam information of the first network device indicates a beam weight of the first network device. It may be understood that a transmit beam and a receive beam each may correspond to a beam weight. For example, a beam weight corresponding to an unused beam is 0, and a beam weight corresponding to a used beam is greater than 0. The beam weight may be determined based on a data transmission service amount of a beam. For example, the beam weight may be the data transmission service amount. It may be understood that the beam information is information related to a beam.

The data transmission service amount includes one or more of the following: a quantity of terminals served by a beam, a throughput corresponding to the beam, a historical rate corresponding to the beam, an average transport block size (transport block size, TBS) or a total TBS corresponding to the beam, an average modulation and coding scheme (modulation and coding scheme, MCS) or a total MCS corresponding to the beam, a quantity of to-be-transmitted data packets corresponding to the beam, or a size of a to-be-transmitted data packet corresponding to the beam. For example, the throughput corresponding to the beam represents a quantity of bits transmitted on a beam of the first network device in unit time. The historical rate corresponding to the beam represents a historical rate of transmitting data on the beam of the first network device. The average TBS or the total TBS corresponding to the beam represents an average value or a sum of TBSs transmitted on the beam of the first network device. The average MCS or the total MCS corresponding to the beam represents an average value or a sum of MCSs used on the beam of the first network device. The quantity of to-be-transmitted data packets corresponding to the beam represents a quantity of to-be-transmitted data packets on the beam of the first network device. The size of the to-be-transmitted data packet corresponding to the beam represents a size of a to-be-transmitted data packet on the beam of the first network device.

The beam weight may be classified into K levels, for example, which may be respectively identified as 0 to K-1. For example, K=3, 5, 8, 12, or 16. The beam information may include Beam ID and weight. For example, beam information {Beam ID#1, x} indicates that a beam weight of a beam with a beam index being 1 of the first network device is x, and x indicates a level in the K levels. The N network devices may determine beam weights by using a same rule.

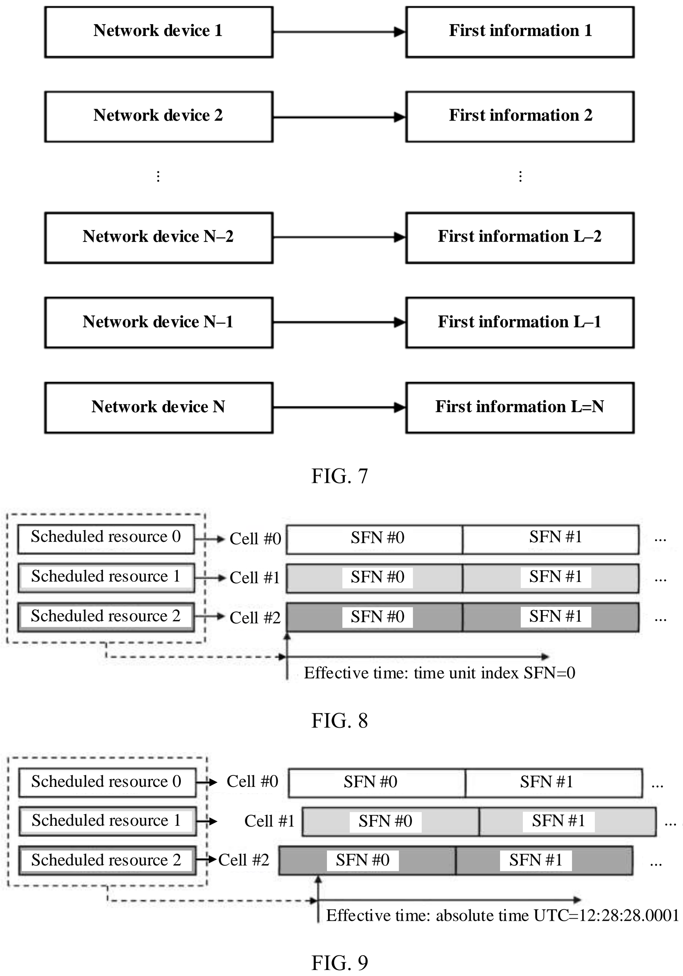

According to the foregoing implementation method, the central node obtains the L pieces of first information, where one of the L pieces of first information includes the beam information of the first network device and indicating the beam weight of the first network device. It may be understood that, in this implementation, the N network devices report N pieces of beam information in total. For example, as shown in FIG. 7, a network device 1 reports beam information indicating a beam weight of the network device 1, where the beam information is included in first information 1; a network device 2 reports beam information indicating a beam weight of the network device 2, where the beam information is included in first information 2; ...; and a network device N reports beam information indicating a beam weight of the network device N, where the beam information is included in first information L, and L=N.

In a possible implementation method for obtaining the L pieces of first information by the central node, the central node receives the L pieces of first information from the N network devices, where L=N. In this case, the central node may be a device other than the N network devices, for example, an OAM module. Alternatively, the central node may be a module or a unit in a network device other than the N network devices, for example, a CU.

In another possible implementation method for obtaining the L pieces of first information by the central node, the central node receives L-1 pieces of first information from N-1 network devices, and locally obtains one piece of first information, where the N network devices include the N-1 network devices, and the L pieces of first information include the L-1 pieces of first information and the one piece of first information, where L=N. In this case, the central node may be one of the N network devices, or may be a module or a unit in one of the N network devices, for example, a CU.

According to the foregoing implementation method, beam weights of the N network devices are centrally reported, to provide reference information for subsequent centralized scheduling during resource allocation for the network devices. In addition, the foregoing implementation method may further help the central node perform overall planning on scheduled resources for all network devices, to avoid simultaneous scheduling of beams with strong interference between the network devices, thereby reducing CLI and blocking interference.

In another possible implementation method of the part 520, the central node determines the M scheduled resources based on beam weights of the N network devices, where the M scheduled resources are used for resource allocation for the M network devices. For a beam with a larger beam weight, more time domain resources and frequency domain resources are allocated. For a beam with a smaller beam weight, fewer time domain resources and frequency domain resources are allocated. For an unused beam or a beam with a beam weight being 0, no time domain resource or frequency domain resource may be allocated. For example, for a beam that serves a larger quantity of terminals, more time domain resources and frequency domain resources are allocated. For a beam that corresponds to a larger throughput, more time domain resources and frequency domain resources are allocated. For a beam that corresponds to a higher historical rate, more time domain resources and frequency domain resources are allocated. For a beam that corresponds to a larger average TBS or total TBS, more time domain resources and frequency domain resources are allocated. For a beam that corresponds to a larger average MCS or total MCS, fewer time domain resources and frequency domain resources are allocated. For a beam that corresponds to a larger quantity of to-be-transmitted data packets, more time domain resources and frequency domain resources are allocated. For a beam that corresponds to to-be-transmitted data packets that have a larger overall size, more time domain resources and frequency domain resources are allocated.

According to the foregoing implementation method, with an objective of reducing CLI and blocking interference between the network devices, a criterion is provided for determining the M scheduled resources, to implement centralized allocation of resources for the M network device, so as to provide a basis for reducing the CLI and blocking interference between the network devices.

Optionally, in another possible implementation of the beam information of the first network device, the beam information of the first network device may further include one or more of the following: quantities of terminals served by a receive beam and a transmit beam of the first network device, throughputs corresponding to the receive beam and the transmit beam of the first network device, historical rates corresponding to the receive beam and the transmit beam of the first network device, TBSs corresponding to the receive beam and the transmit beam of the first network device, MCSs corresponding to the receive beam and the transmit beam of the first network device, quantities of to-be-transmitted data packets corresponding to the receive beam and the transmit beam of the first network device, sizes of to-be-transmitted data packets corresponding to the receive beam and the transmit beam of the first network device, or a beam index of a transmit beam that is not used by the first network device and a beam index of a receive beam that is not used by the first network device.

Optionally, the method 500 further includes a part 530: The central node sends second information to one of the M network devices, where the second information indicates one of the M scheduled resources. The scheduled resource is used for resource allocation for one of the M network devices. The scheduled resource includes one or more of a time domain resource, a frequency domain resource, or a space domain resource that is available to the network device. The network device obtains, from the scheduled resource, a resource used for data transmission (which may also be referred to as an allocated resource). For example, the data transmission may be data transmission between the network device and a terminal device served by the network device. For example, each of the M network devices obtains, from each of the M scheduled resources, a resource used for data transmission, to reduce a probability that a beam pair with large interference between the M network devices is simultaneously scheduled, or simultaneously schedule a beam pair with large interference between the M network devices at a large frequency interval.

In a possible implementation method of the second information, the second information indicates one of the M scheduled resources, and the scheduled resource is used for time domain resource allocation and space domain resource allocation (where the space domain resource allocation may have different expressions, for example, beam domain resource allocation) for one of the M network devices.

For example, the scheduled resource indicated by the second information is used for time domain resource allocation on each beam of the network device in space domain. The second information may include Beam ID and Time domain resource set. Time domain resource set represents a time domain resource allocated to a beam with a beam index being Beam ID of the network device. A method for indicating the time domain resource may include a bit map (bit map), a start position and a length of the time domain resource, or a start and length indicator value (start and length indicator value, SLIV). The SLIV may be calculated based on a start and the length of the time domain resource. For example, a scheduled resource indicated by second information {Beam ID#1, Time domain resource set} may be used for allocation of an available time domain resource on a beam with a beam index being 1 of the network device. For another example, a scheduled resource indicated by second information {Beam ID#1, Time domain resource set} may alternatively be used for allocation of an unavailable time domain resource on a beam with a beam index being 1 of the network device.

For example, the scheduled resource indicated by the second information is used for space domain resource allocation for the network device in each time unit. The time unit may be a subframe, a half-frame, a slot, a symbol, or the like. The second information may include Time domain unit index and Beam set. Time domain unit index represents a time unit index. For example, Time domain unit index#0 represents a start time unit used for resource allocation. Time domain unit index#1 represents a time unit with an interval of one time unit relative to Time domain unit index#0. Beam set represents a space domain resource, which may be understood as a beam set, allocated to the network device in a time unit whose time unit index is Time domain unit index. For example, a scheduled resource indicated by second information {Time domain unit index#0, Beam set} is used for an available space domain resource or beam seat of the network device in a stat time unit used for resource allocation. For example, a scheduled resource indicated by second information {Time domain unit index#1, Beam set} may be used for allocation of an available space domain resource or beam set for the network device in a time unit with a time unit index being 1. For another example, a scheduled resource indicated by second information {Time domain unit index#1, Beam set} may alternatively be used for allocation of an unavailable space domain resource or beam set for the network device in a time unit with a time unit index being 1.

According to the foregoing implementation method, time domain resources and space domain resources are centrally allocated to the M network devices, to implement centralized scheduling for the M network devices, improve a scheduling mechanism, and reduce CLI and blocking interference between the N network devices.

In another possible implementation method of the second information, the second information indicates one of the M scheduled resources, and the scheduled resource is used for time domain resource allocation, frequency domain resource allocation, and space domain resource allocation for one of the M network devices.

For example, the scheduled resource indicated by the second information is used for time domain resource allocation and frequency domain resource allocation on each beam of the network device in space domain. The second information may include Beam ID and Time-frequency domain resource set. Time-frequency domain resource set represents a time domain resource and a frequency domain resource allocated to a beam with a beam index being Beam ID of the network device. Time-frequency domain resource set includes Time domain resource set and Frequency domain resource set. Time domain resource set represents the time domain resource allocated to the beam with a beam index being Beam ID of the network device, and Frequency domain resource set represents the frequency domain resource allocated to the beam with a beam index being Beam ID of the network device. An implementation method of the time domain resource allocation is described above, and details are not described herein again. A method for indicating the frequency domain resource may include a bit map (bit map), a start position and a length of the frequency domain resource, or a resource indicator value (resource indicator value, RIV). The RIV may be calculated based on a start and the length of the frequency domain resource. For example, a scheduled resource indicated by second information {Beam ID#1, Time-frequency domain resource set} may be used for allocation of an available time domain resource and frequency domain resource on a beam with a beam index being 1 of the network device. For another example, a scheduled resource indicated by second information {Beam ID#1, Time-frequency domain resource set} may alternatively be used for allocation of an unavailable time domain resource and frequency domain resource on a beam with a beam index being 1 of the network device.

For example, the scheduled resource indicated by the second information is used for frequency domain resource allocation and space domain resource allocation for the network device in each time unit. The second information may include Time domain unit index, Beam ID, and frequency domain resource set. For example, {Time domain unit index#1, {Beam ID, frequency domain resource set}} indicates a frequency domain resource and a space domain resource that are allocated to the network device in a time unit with a time unit index being 1. The foregoing has provided descriptions about implementation methods of the frequency domain resource allocation and the space domain resource allocation, and details are not described herein again. For example, a scheduled resource indicated by second information {Time domain unit index#1, {Beam ID#1, frequency domain resource set}} may be used for allocation of an available frequency domain resource on a beam with a beam index being 1 of the network device in a time unit with a time unit index being 1. For another example, a scheduled resource indicated by second information {Time domain unit index#1, {Beam ID#1, frequency domain resource set}} may alternatively be used for allocation of an unavailable frequency domain resource on a beam with a beam index being 1 of the network device in a time unit with a time unit index being 1.

According to the foregoing implementation method, time domain resources, frequency domain resources, and space domain resources are centrally allocated to the M network devices, to implement centralized scheduling for the M network devices, improve a scheduling mechanism, and reduce CLI and blocking interference between the N network devices.

Duration of one of the M scheduled resources in time domain may be P, and a unit of the duration P may be second (second, s), millisecond (millisecond, ms), microsecond (microsecond, µs), nanosecond (nanosecond, ns), symbol, slot, half frame, frame, or the like. For example, P=32, 64, 128, 256, 512, or 1024 frames. One of the M scheduled resources may alternatively be periodically repeated in time domain, and a repetition periodicity may be the duration P of one scheduled resource in the M scheduled resources in time domain.

In a possible implementation method of effective time of the M scheduled resources, the M network devices are time-synchronized. For example, system frames that are of the M network devices and that have a same system frame number (system frame number, SFN) are synchronized. The effective time of the M scheduled resources indicates time at which the M scheduled resources start to be used for resource allocation.

The effective time of the M scheduled resources may be indicated by the central node. For example, as shown in FIG. 8, Cell #0, Cell #1, and Cell #2 respectively represent a network device 0, a network device 1, and a network device 2 that are SFN-synchronized, and a scheduled resource 0, a scheduled resource 1, and a scheduled resource 2 are respectively used for resource allocation for the network device 0, the network device 1, and the network device 2. The central node indicates that effective time of the scheduled resource 0, the scheduled resource 1, and the scheduled resource 2 is a time unit index, that is, SFN=0. Therefore, the scheduled resource 0, the scheduled resource 1, and the scheduled resource 2 start to take effect in a system frame whose SFN=0 (for example, a 1^{st} symbol of the system frame). It may be understood that when the time unit index includes only an SFN index, the effective time may be, by default, a 1^{st} symbol of a system frame having the SFN index; or when the time unit index includes an SFN index and a symbol index of a system frame of the SFN index, the effective time may be a symbol that has the symbol index and that is of the system frame having the SFN index.

The effective time of the M scheduled resources may alternatively be a predefined moment. For example, the M scheduled resources take effect at a 1^{st} symbol of a system frame whose SFN=0.

In another possible implementation method of effective time of the M scheduled resources, the M network devices are not time-synchronized. For example, system frames that are of the M network devices and that have a same SFN are not synchronized. The effective time of the M scheduled resources may be indicated by the central node. The effective time is absolute time, for example, coordinated universal time (coordinated universal time, UTC). A unit of the UTC may be s, ms, µs, ns, or 1/2^{µ} ms (where µ=0, 1, 2, ..., 10). For example, as shown in FIG. 9, SFNs of a network device 0, a network device 1, and a network device 2 are not synchronized, and the central node indicates that effective time of a scheduled resource 0, a scheduled resource 1, and a scheduled resource 2 is absolute time UTC=12:28:28.0001, February (optional) 17 (optional), 2023 (optional). Therefore, the scheduled resource 0, the scheduled resource 1, and the scheduled resource 2 start to take effect at the absolute time UTC=12:28:28.0001, February (optional) 17 (optional), 2023 (optional).

According to the foregoing implementation method, it may be understood that the M scheduled resources are time-synchronized. The resources are simultaneously allocated to the M network devices, to avoid simultaneous scheduling of beams with strong interference between the network devices, thereby reducing CLI and blocking interference.

In a possible implementation of part 520, the M scheduled resources include a first scheduled resource and a second scheduled resource, the first scheduled resource is used for resource allocation for a second network device, the second scheduled resource is used for resource allocation for a third network device, and the M network devices include the second network device and the third network device. The first scheduled resource includes a first beam, the second scheduled resource includes a second beam, and an RSRP corresponding to a beam pair of the first beam and the second beam is less than a third threshold. The third threshold may be a maximum CLI value and blocking interference value that are between the second network device and the third network device and that do not affect transmission service performance. According to the foregoing method, a scheduling mechanism between a plurality of network devices is improved, and CLI and blocking interference between the network devices are coordinated and reduced.

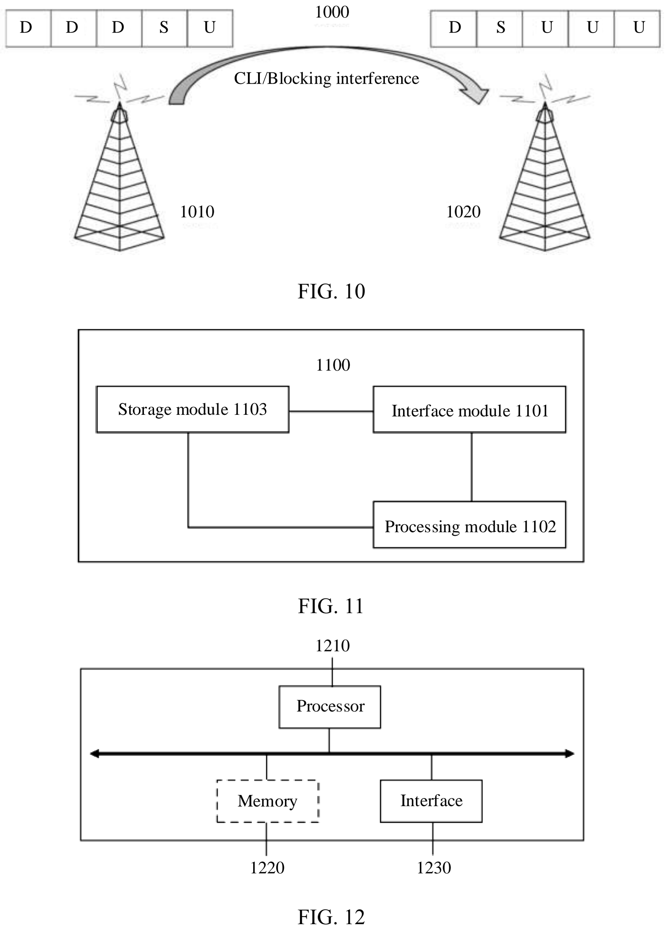

It may be understood that the method provided in this application may alternatively be applied to a scenario other than SBFD. For example, FIG. 10 shows a flexible TDD scenario. FIG. 10 shows a system 1000, including a radio access network device 1010 and a radio access network device 1020. The radio access network device 1010 uses a slot configuration of DDDSU, the radio access network device 1020 uses a slot configuration of DSUUU, and the radio access network device 1010 and the radio access network device 1020 are time-synchronized. In this scenario, a third slot of the radio access network device 1010 is a downlink slot D. In this case, the radio access network device 1010 sends downlink data to a terminal. Similarly, a third slot of the radio access network device 1020 is an uplink slot U. In this case, the radio access network device 1020 receives uplink data from another terminal. In this slot, CLI and blocking interference are generated on uplink data receiving of the radio access network device 1020 during downlink data sending of the radio access network device 1010, resulting in deterioration of uplink network performance of the radio access network device 1020. Embodiments of this application are also applicable to the scenario of the communication system shown in FIG. 10.

In correspondence to the methods provided in the foregoing method embodiments, an embodiment of this application further provides a corresponding apparatus. The apparatus includes corresponding modules configured to perform the foregoing embodiments. The module may be software, hardware, or a combination of software and hardware.

FIG. 11 provides an apparatus 1100. Alternatively, the apparatus may be a radio access network device, a component (for example, an integrated circuit or a chip) of the radio access network device, or a logical node, a logical module, or software that can implement all or a part of functions of the radio access network device. Alternatively, the apparatus may be a central node, or may be a component (for example, an integrated circuit or a chip) of the central node, or may be a logical node, a logical module, or software that can implement all or a part of functions of the central node. The apparatus may alternatively be another communication module. For example, the apparatus 1100 may implement functions of the radio access network device in the method 500 and various possible implementations, or the apparatus 1100 may implement functions of the central node in the method 500 and various possible implementations. The apparatus 1100 may include: an interface module 1101 (or referred to as an interface unit) and a processing module 1102 (or referred to as a processing unit), and may further include a storage module 1103 (or referred to as a storage unit).

In a possible design, one or more modules in FIG. 11 may be implemented by one or more processors, may be implemented by one or more processors and memories, may be implemented by one or more processors and transceivers, or may be implemented by one or more processors, memories, and transceivers. This is not limited in embodiments of this application. The processor, the memory, and the transceiver may be disposed separately, or may be integrated.

The apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the central node in embodiments of this application. For example, the apparatus includes a corresponding module, unit, or means (means) used by the central node to perform the steps related to the central node in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the apparatus 1100 includes the processing module 1102 and the interface module 1101. The apparatus 1100 may be, for example, a central node, or may be a component (for example, a processor, a chip, or a chip system) of the central node, or may be a logical node, a logical module, or software that can implement all or a part of functions of the central node. The interface module 1101 is configured to, or the interface module 1101 and the processing module 1102 are configured to: obtain L pieces of first information, where one of the L pieces of first information includes beam information of a first network device, the first network device is one of N network devices, L is an integer greater than or equal to 1, and N is an integer greater than or equal to L. The processing module 1102 is configured to determine M scheduled resources based on the L pieces of first information, where one of the M scheduled resources is used for resource allocation of one of M network devices, the N network devices include the M network devices, and M is a positive integer less than or equal to N.

In a possible implementation of the apparatus 1100, L=N-1.

In a possible implementation of the apparatus 1100, L=N. Obtaining the L pieces of first information includes: The interface module 1101 is configured to receive the L pieces of first information from the N network devices.

In a possible implementation of the apparatus 1100, L=N. Obtaining the L pieces of first information includes: The interface module 1101 is configured to receive L-1 pieces of first information from N-1 network devices, and the processing module 1102 is configured to locally obtain one piece of first information, where the N network devices include the N-1 network devices, and the L pieces of first information include the L-1 pieces of first information and the one piece of first information.

In a possible implementation of the apparatus 1100, the beam information of the first network device indicates an RSRP corresponding to a beam pair between the first network device and a network device other than the first network device in the N network devices.

In a possible implementation of the apparatus 1100, the beam information of the first network device indicates a beam pair between the first network device and a network device other than the first network device in the N network devices, and the beam pair meets:
an RSRP corresponding to the beam pair is greater than a first threshold;
an RSRP corresponding to the beam pair is less than a second threshold;
the beam pair is top N1 beam pairs sorted in descending order based on RSRPs corresponding to beam pairs; or
the beam pair is last N2 beam pairs sorted in descending order based on RSRPs corresponding to beam pairs.

In a possible implementation of the apparatus 1100, the beam information of the first network device indicates a beam weight of the first network device.

In a possible implementation of the apparatus 1100, the interface module 1101 is further configured to send second information to one of the M network devices, where the second information indicates one of the M scheduled resources.

In a possible implementation of the apparatus 1100, the M scheduled resources include a first scheduled resource and a second scheduled resource, the first scheduled resource includes a first beam, the second scheduled resource includes a second beam, and an RSRP corresponding to a beam pair of the first beam and the second beam is less than a third threshold.

It may be understood that, for beneficial effects corresponding to the apparatus 1100 and various possible implementations, refer to the descriptions in the foregoing method embodiment or SUMMARY. Details are not described herein again.

Optionally, the apparatus 1100 may further include the storage module 1103, configured to store data or instructions (which may also be referred to as code or a program). The other modules may interact with or be coupled to the storage module, to implement corresponding methods or functions. For example, the processing module 1102 may read the data or the instructions in the storage module 1103, so that the apparatus 1100 implements the method in the foregoing embodiments.

In an example, the module in the foregoing apparatus may be one or more integrated circuits configured to implement the foregoing methods, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

FIG. 12 is a diagram of an apparatus according to an embodiment of this application. The apparatus may be configured to implement the method 500 and various possible implementations. As shown in FIG. 12, the apparatus includes a processor 1210 and an interface 1230, and the processor 1210 is coupled to the interface 1230. The interface 1230 is configured to communicate with another module or device. The interface 1230 may be a transceiver or an input/output interface. The interface 1230 may be, for example, an interface circuit. Optionally, the apparatus further includes a memory 1220, configured to store instructions executed by the processor 1210, store input data required by the processor 1210 to run the instructions, or store data generated after the processor 1210 runs the instructions.

The method 500 and various possible implementations may be implemented by the processor 1210 by invoking program or the instructions stored in the memory 1220. The memory 1220 may be inside the apparatus, or may be outside the apparatus. This is not limited in this application.

Optionally, a function/implementation process of the interface module 1101 and the processing module 1102 in FIG. 11 may be implemented by the processor 1210 in the apparatus shown in FIG. 12. Alternatively, a function/implementation process of the processing module 1102 in FIG. 11 may be implemented by the processor 1210 in the apparatus shown in FIG. 12, and a function/implementation process of the interface module 1101 in FIG. 11 may be implemented by the interface 1230 in the apparatus shown in FIG. 12. For example, the function/implementation process of the interface module 1101 may be implemented by the processor by invoking program instructions in the memory to drive the interface 1230.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

When the foregoing apparatus is a chip used in a central node, the chip implements functions of the central node in the foregoing method embodiments. The chip receives information from another module (for example, a radio frequency module or an antenna) in the central node, where the information is from a radio access network device or a terminal. Alternatively, the chip sends information to another module (for example, a radio frequency module or an antenna) in the central node, where the information is sent by the central node to a radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or a part of the foregoing embodiments may be implemented by using software, hardware, firmware, or any combination thereof. When software is configured to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Steps of the methods described in embodiments of this application may be directly embedded into hardware, a software unit executed by the processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may be connected to the processor, so that the processor can read information from the storage medium and write information to the storage medium. Optionally, the storage medium may be integrated into the processor. The processor and the storage media may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented. For same or similar parts in embodiments of this application, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A resource allocation method, comprising:
obtaining L pieces of first information, wherein one of the L pieces of first information comprises beam information of a first network device, the first network device is one of N network devices, L is an integer greater than or equal to 1, and N is an integer greater than or equal to L; and
determining M scheduled resources based on the L pieces of first information, wherein one of the M scheduled resources is used for resource allocation for one of M network devices, the N network devices comprise the M network devices, and M is a positive integer less than or equal to N.

2. The method according to claim 1, wherein L=N-1.

3. The method according to claim 1, wherein L=N; and
the obtaining the L pieces of first information comprises: receiving the L pieces of first information from the N network devices.

4. The method according to claim 1, wherein L=N; and
the obtaining the L pieces of first information comprises: receiving L-1 pieces of first information from N-1 network devices, and locally obtaining one piece of first information, wherein the N network devices comprise the N-1 network devices, and the L pieces of first information comprise the L-1 pieces of first information and the one piece of first information.

5. The method according to claim 1 or 2, wherein the beam information of the first network device indicates a reference signal received power RSRP corresponding to a beam pair between the first network device and a network device other than the first network device in the N network devices.

6. The method according to claim 1 or 2, wherein the beam information of the first network device indicates a beam pair between the first network device and a network device other than the first network device in the N network devices, and the beam pair meets:
an RSRP corresponding to the beam pair is greater than a first threshold;
an RSRP corresponding to the beam pair is less than a second threshold;
the beam pair is top N1 beam pairs sorted in descending order based on RSRPs corresponding to beam pairs; or
the beam pair is last N2 beam pairs sorted in descending order based on RSRPs corresponding to beam pairs.

7. The method according to claim 1, 3, or 4, wherein the beam information of the first network device indicates a beam weight of the first network device.

8. The method according to any one of claims 1 to 7, wherein the method further comprises: sending second information to one of the M network devices, wherein the second information indicates one of the M scheduled resources.

9. The method according to any one of claims 1 to 8, wherein the M scheduled resources comprise a first scheduled resource and a second scheduled resource, the first scheduled resource comprises a first beam, the second scheduled resource comprises a second beam, and an RSRP corresponding to a beam pair of the first beam and the second beam is less than a third threshold.

10. A communication apparatus, comprising an interface module and a processing module, wherein
the interface module is configured to or the interface module and the processing module are configured to: obtain L pieces of first information, wherein one of the L pieces of first information comprises beam information of a first network device, the first network device is one of N network devices, L is an integer greater than or equal to 1, and N is an integer greater than or equal to L; and
the processing module is configured to determine M scheduled resources based on the L pieces of first information, wherein one of the M scheduled resources is used for resource allocation for one of M network devices, the N network devices comprise the M network devices, and M is a positive integer less than or equal to N.

11. The apparatus according to claim 10, wherein L=N-1.

12. The apparatus according to claim 10, wherein L=N; and
that the interface module is configured to obtain the L pieces of first information comprises: the interface module is configured to receive the L pieces of first information from the N network devices.

13. The apparatus according to claim 10, wherein L=N; and
that the interface module is configured to obtain the L pieces of first information comprises: the interface module is configured to receive L-1 pieces of first information from N-1 network devices, the processing module is configured to locally obtain one piece of first information, wherein the N network devices comprise the N-1 network devices, and the L pieces of first information comprise the L-1 pieces of first information and the one piece of first information.

14. The apparatus according to claim 10 or 11, wherein the beam information of the first network device indicates a reference signal received power RSRP corresponding to a beam pair between the first network device and a network device other than the first network device in the N network devices.

15. The apparatus according to claim 10 or 11, wherein the beam information of the first network device indicates a beam pair between the first network device and a network device other than the first network device in the N network devices, and the beam pair meets:
an RSRP corresponding to the beam pair is greater than a first threshold;
an RSRP corresponding to the beam pair is less than a second threshold;
the beam is top N1 beam pairs sorted in descending order based on RSRPs corresponding to beam pairs; or
the beam pair is last N2 beam pairs sorted in descending order based on RSRPs corresponding to beam pairs.

16. The apparatus according to claim 10, 12, or 13, wherein the beam information of the first network device indicates a beam weight of the first network device.

17. The apparatus according to any one of claims 10 to 16, wherein the interface module is further configured to send second information to one of the M network devices, wherein the second information indicates one of the M scheduled resources.

18. The apparatus according to any one of claims 10 to 17, wherein the M scheduled resources comprise a first scheduled resource and a second scheduled resource, the first scheduled resource comprises a first beam, the second scheduled resource comprises a second beam, and an RSRP corresponding to a beam pair of the first beam and the second beam is less than a third threshold.

19. A communication apparatus, comprising a processor, wherein the processor is coupled to a memory, the memory is configured to store a program or instructions, and when the program or the instructions are executed by the processor, the apparatus is caused to perform the method according to any one of claims 1 to 9.

20. A computer-readable storage medium, storing instructions, wherein when the instructions are executed, a computer is caused to perform the method according to any one of claims 1 to 9.

21. A computer program product, comprising computer program code, wherein when the computer program code is run, the method according to any one of claims 1 to 9 is implemented.
